# EUROPEAN PATENT APPLICATION

(11) **EP 2 103 976 A1**
(43) Date of publication of application: **23.09.2009**
(21) Application number: 08251024.9
(22) Date of filing: 20.03.2008
(51) Int. Cl.: G02B 6/38, G02B 6/26

(54) **Optical connector**

(71) Applicant: British Telecommunications Public Limited Company, London EC1A 7AJ (GB)
(72) Inventor: The designation of the inventor has not yet been filed
(74) Representative: Chabasseur, Vincent Robert

(57) **Abstract**

The present invention relates to a connector assembly, in particular and optical connector assembly for making a releasable optical connection. There is provided an optical connector assembly having: a first connector (10); a second connector (14), the first connector and the second connector being releasably engagable with one another; and, a movable abutment member (70), the abutment member having a first position which allows the first and second connectors to move sufficiently into together such that a first level of optical coupling is possible, and a second position in which the first and second connectors are prevented from moving sufficiently together so as to achieve the first level of optical coupling, wherein the second position allows optical coupling at a second level that is less than the first level.

## Description

The present invention relates to a connector assembly, in particular and optical connector assembly for making a releasable optical connection.

Optical connector systems are known which releasably engage with one another so as to form an optical connection between waveguides. With such a connector system, the optical connection is made manually by simply bringing the to connectors together until they are fully engaged with one another. However, the resulting optical connection can be inappropriate. For example, equipment may be connected to an optical system, which equipment is capable of generating excessively high levels of light for that system. Alternatively or in addition, the equipment may not be arranged to communicate with the required protocol or may generate light at an incorrect wavelength.

According to the present invention, there is provided an optical connector assembly having: a first connector; a second connector, the first connector and the second connector being releasably engagable with one another; and, a movable abutment member, the abutment member having a first position which allows the first and second connectors to move sufficiently together such that a first level of optical coupling is possible, and a second position in which the first and second connectors are prevented from moving sufficiently together so as to achieve the first level of optical coupling, wherein the second position allows optical coupling at a second level that is less than the first level.

Because the second position allows some degree of optical coupling, that is, optical coupling at a second level that is less than the first level, information can be communicated when the abutment member is in the second position. The information can for example be used to allow a user to determine whether an optical connection is appropriate. If a connection is determined to be appropriate, the abutment member can be moved to allow the first and second connectors to be brought together into a better coupled position. The optical connector assembly may thus provide a two stage coupling process, thereby reducing the likelihood that an inappropriate connection will be made. However, information need not be communicated between the connectors when the abutment member is in the second position: the abutment member may simply be used to provide a reminder to a user that an optical connection should be properly considered. Each connector will normally have a respective waveguide retained therein, which waveguides can be optically coupled by the connector assembly. The waveguides will preferably each be formed from optical fiber, for example optical fiber arranged to carry infrared radiation in a single mode fashion.

The abutment member may have a third position in which optical coupling between the first connector and the second connector is prevented. In a preferred embodiment, the abutment member is mounted on the first connector, and has a shutter portion which prevents optical coupling when the abutment member is in the third position. As well as preventing coupling, the shutter portion reduces the risk of unwanted light entering the waveguide held within the connector, as well as dirt affecting the performance of the connector. A resilient member is preferably provided so as to bias the abutment member into the third position.

Preferably, the abutment member has a shaped portion arranged such that, in use, when the first and second connectors are moved into engagement with one another, the second connector bears against the shaped portion and thereby urges the abutment member into the second position. If the abutment member is normally biased into the third position, the relative movement of the first and second connectors can be used to automatically move the abutment member out of the third position.

The shaped portion preferably has an inclined surface against which the second connector is arranged to slide when the first and second connectors are moved into engagement, the inclined surface having an angle of inclination relative to the movement direction of the first and second connectors, which angle is between 10° and 80°. Clearly, the optimum angle can be decided by trial and error, in dependence on the exact configuration of each connector. However, the angle may be substantially 45°.

The abutment member may have a grip portion for allowing the abutment member to be moved manually from one of the first and second positions to the other of the first and second positions. However, instead or in addition, an electrical actuator may be provided to move the abutment member. In one embodiment, the movement of the first and second connectors towards or into one another causes the automatic movement of the abutment member from the third position and into the second position, further movement of the connectors towards one another being prevented by the abutment member until the abutment member is moved into the first position. Movement of the abutment member into the first position may be effected through the use of the electrical actuator or manually using the grip portion.

According to a further aspect of the invention, a method of forming an optical connection between a first connector and a second connector, the first connector having a movable abutment member which, in a blocking position, allows a base level of optical coupling between the first and second connectors but prevents a higher level of optical coupling than the base level, including: (i) bringing the first and second connectors together such that the base level optical of coupling is achieved; (ii) moving the abutment member out of the blocking position; and, subsequently, (iii) bringing the first and second connectors further together so as to achieve a level of coupling that is higher than the base level.

The first connector may be used to form a connection to an optical network, for example a passive optical network or PON. The optical network may have a trunk fiber connected by a splitter unit to a plurality of branch fibers, such that data transmitted along the trunk fiber is broadcast to the branch fibers. The first connector, which may be wall mounted, may be connected to a far end of a branch fiber so as to receive the broadcast data. The base level of optical coupling will preferably be sufficient to convey at least part of the broadcast data. As a result, the broadcast data conveyed when the first and second connectors are coupled at the base level may be used to make a decision as to whether to move the abutment member out of the blocking position in order to achieve a greater level of coupling than is possible when the abutment member is in the blocking position.

The invention will now be further described, by way of example only, and with reference to the following drawings in which:
Figure 1 shows an optical connector assembly in an un-coupled state, in accordance with the present invention;
Figure 2 shows the optical connector of figure 1 in a partially coupled state;
Figure 3 shows the optical connector of figure 1 in a fully coupled state;
Figure 4 shows, in transverse cross section, a connector of the connector assembly of figure 1;
Figure 5 shows a first device and a second device optically coupled using the optical connector of figure 1;
Figure 6 shows a further embodiment having an optical switch arrangement; and,
Figure 7 shows a connector assembly with an electrical actuator.

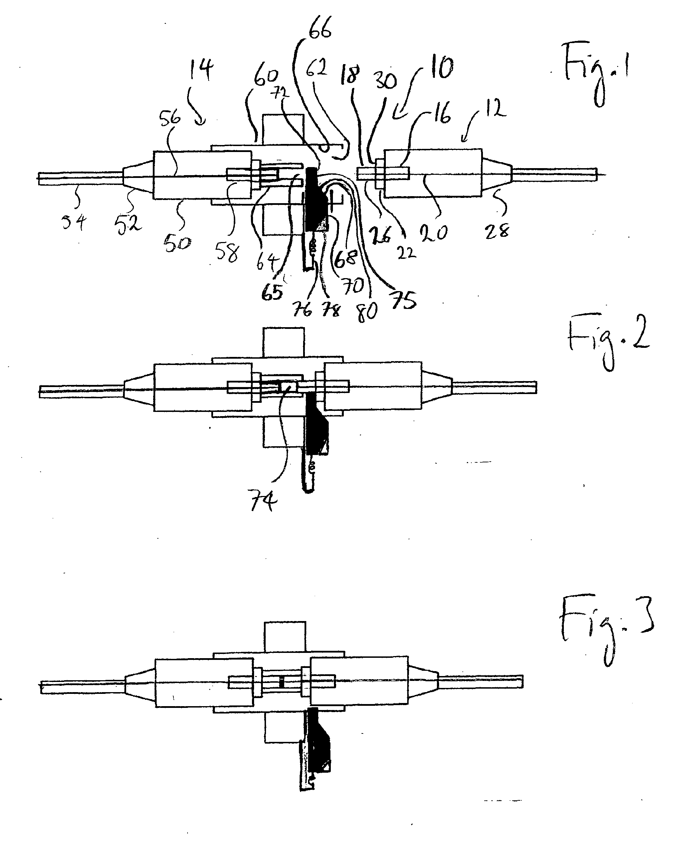

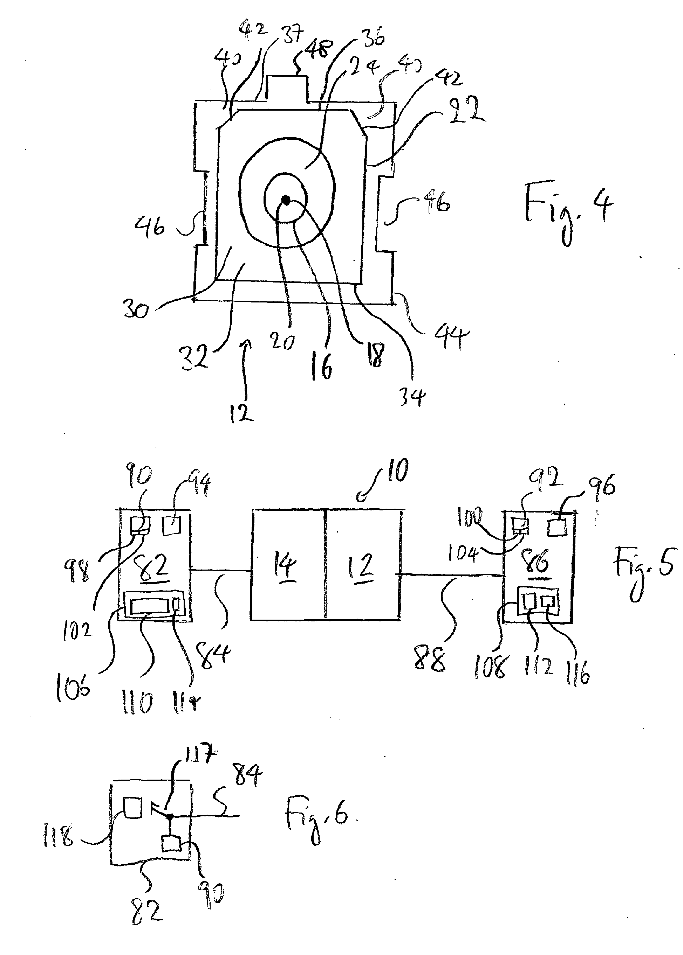

Figure 1 illustrates schematically, in longitudinal cross section, an optical fiber connector assembly 10 having a male connector 12 arranged to releasably receive a female connector 14. The male connector has a ferrule assembly 16 with a tubular passage 18 in which is is held a first optical fiber 20 along a longitudinal axis. With reference to figure 4 which shows the male connector in cross section transverse to the longitudinal axis, the ferrule assembly 16 is mounted within a main body member 22 having a cylindrical hollow portion, the ferrule assembly 16 being arranged centrally within the cylindrical portion so as to provide an annular cavity 24 between the ferrule assembly and an inner wall of the main body member. The ferrule assembly 16 has a forward projecting portion 26 which projects beyond the main body member 22. A retention member 28 is provided to retain the optical fiber within the ferrule assembly.

The main body member has a forward face 30 arranged transverse to the longitudinal axis along which the fiber that is held. Towards the lower end of the forward face (in the orientation of figure 4), there is provided and an abutment region that is generally normal to the longitudinal axis.

The main body member is generally rectangular in cross section having a flat underside 34 and generally flat upper surface 36. Generally parallel side surfaces 58 are provided normal to the underside 34. A respective cutout portion 40 is provided towards the upper end of each side surface, the cutout portions being defined by respective faceted surfaces 42. The faceted surfaces are arranged between the upper surface and each side surface, each faceted surface extending at approximately 45° from a respective side surface.

In the main body member is located within a frame 44, the frame having openings 46 arranged to allow access to releasable engagement means (not shown) located on the side surfaces of the main body member. An upstanding ridge portion 48, elongate in the longitudinal direction, is provided on an upper surface of the frame.

In a similar fashion to the male connector, the female connector 14 has a main body member 50 with a retaining portion 52 at a rearward end thereof, for retaining an optical cable 54 having an optical fiber 56 therein. A female a ferrule assembly 58 for holding the optical fiber 56 is provided in a central longitudinal axis of the female connector 14. The (female) main body member 50 is held in a connector housing 60, which housing has a main cavity 62 dimensioned so as to receive the male connector 12.

Held within the housing 60 is a cylindrical sleeve 64, in which is located in the female ferrule assembly. The sleeve 64 extends beyond the female ferrule assembly so as to project into the main cavity 62 of the connector housing 60. The main cavity has internal walls 66 that are shaped so as to cooperate with the frame 44 of the male connector 12, and to guide the male connector such that when the male connector is introduced into the main cavity, the ferrule assembly 26 of the male connector is received in the cylindrical sleeve 64 through an opening 65 thereof. The internal walls of the main cavity serve as coarse guide means to guide the relative movement of the male and female connectors, whereas the cylindrical sleeve 64 serves to guide and retain the optical fibers in precise axial alignment with one another.

The female connector housing 60 has a transverse channel 68 (transverse to the longitudinal axis), in which there is provided, in sliding engagement with the transverse channel, an abutment member 70. The abutment member 70 can move between three positions as shown in figures 1-3. In figure 1, the abutment member is in a closed position. In the closed position, an end portion 72 of the abutment member is positioned in front of the opening 65 in the cylindrical sleeve 64, thereby acting as a closed shutter to the female connector. In this position, the male connector is prevented from optically coupling with the female connector. Furthermore, the optical fibre 56 is protected from dirt as well as unwanted light.

In figure 2, the abutment member 70 is in an intermediate position. In the intermediate position, the end portion 72 of the abutment member 70 is clear of the cylindrical sleeve deepening 65, allowing the ferrule assembly 26 of the female connector 12 to be partly inserted into the cylindrical sleeve. However, the male connector 12 is prevented from being fully introduced into the female connector by the abutment member 70, in particular the end portion thereof. The end portion has an engagement surface 75 which abuts the front face of the main body member. This abutment prevents any further forward movement of the ferrule assembly of the male connector into the cylindrical sleeve. Thus, there remains an air gap between the ferrule assemblies of the male and female connectors. However, the air gap is sufficiently narrow to allow partial optical coupling between the optical fibers of the male and female connectors. That is, the ferrule assembly of the male connector is sufficiently long in the longitudinal direction that when the male connector is advanced as far as is permitted by the abutment member 70 (when the abutment member is in the intermediate position), the optical fiber 20 of the male connector 12 is in partial optical coupling with the optical fiber of the female connector 14. Typically, the distance between the ends of the male and ferrule assemblies (that is, air gap between the ends of their respective fibers) will be about 1 mm.

The effect of the air gap will be to introduce optical loss, that is, to cause a reduction in the intensity of the light as it travels from one connector to the other. This loss is due to the fact that light exiting an optical fiber will disperse over an area that is greater than the optical fiber cross section, whereas only some of this disbursed light will be captured by the fiber at the other optical connector. If the optical fibers are single mode fibers, the number of available modes in the air gap will increase, and these modes will not couple perfectly to the single mode of the fibers. Generally, the greater the length and cross section of the air gap, the greater the loss will be between the connectors. The greater the loss, the lower the signal level will be, and the higher will be the probability that binary data will be corrupted by noise (for a given noise level). Furthermore, the lower the signal level relative to the noise level, the longer in duration a given bit must be in order to average out the noise over the bit period, and thus the lower the maximum possible bit rate for a given error rate. Clearly, the optimum gap between the optical fibers of the male and female connectors in the intermediate position will depend on various factors, such as the noise level, optical input power, and the bit rate. However, a gap of 1 mm is expected to be capable of allowing data communication at rates of above 1 kHz, whereas when full coupling is achieved, data rates of at least 1 MHz of possible.

Clearly, a gap wider than 1 mm is possible if it is desired to further reduce the power level through the connector assembly. Conversely, a narrower gap can be chosen if higher bit rates or higher losses are required in the intermediate position.

In figure 3, the abutment member 70 is in an open position; that is, the abutment member is in a retracted state in which the forward face 13 of the main body member 22 can advanced past the abutment member 70, and in which the ferrule assembly of the male connector 12 can move sufficiently into the sleeve 64 so as to be in good optical coupling with the corresponding ferrule assembly 58 of the female connector 14. Normally, good optical coupling will be achieved when the ferrule assemblies of the male and female connectors are an abutment.

The abutment member 70 will normally be biased towards the closed position by a resilient member 76 (such as a spring), as indicated schematically in figures 1-3. The abutment member has a grip portion 78 arranged to allow a user to pull the abutment member into the open position. Thus, without the intervention of a user, and in the absence of a male connector received in the female connector, the abutment member resides in the closed position shown in figure 1. In the example of figures 1-3, the abutment member 70 has an angled surface 80, oriented at an angle less than 90° to the longitudinal axial direction. The angled surface 80 is arranged to engage with the forward face 30 of the (male) main body member 22, so that when a forward force is exerted on the male connector to introduce the male connector into the female connector, this force is partially translated into a transverse force which urges the abutment member from the closed position and into the intermediate position. As can be seen from figure 2, once the abutment member 72 has been moved into the intermediate position as a result of the forward movement of a male connector into the female connector, the front face all the main body member engages with the engagement surface 75 of the abutment member. Because the engagement surface 75 is arranged normal to the longitudinal axial direction, any further forward force exerted on the on the male connector does not result in any further transverse displacement of the abutment member 72. Thus, the abutment member prevents further forward movement of the male connector unless a user moves the abutment member manually into the open position by pulling on the grip portion 78 against bias off the resilient member 76.

One effect of the present embodiment is that the male and female connectors can be connected in a two-stage process in which, in a first stage, partial coupling is possible, and in a second stage, full coupling (that is, at least improved coupling) is possible, full coupling being possible only after manual or other intervention.

The partial coupling provided at the first stage can be used to perform one or more tests which determine whether full coupling is appropriate. For example, information can be transferred between the connectors (in one or both directions), which information can then be used to decide whether or not to allow full coupling. In one embodiment, the information transferred during partial coupling is used to reduce the risk of a user inadvertently making a full optical connection between devices which should not be so connected.

Figure 5 shows a first optical device 82 connected by a first optical fiber 18 to the female connector 14 of figures 1-3, and a second optical device 86 connected to the corresponding male connector 12 by a second optical fiber 88. Each of the first and second devices have a respective controller stage 90,92 operating in the electrical domain, and a respective optoelectrical interface 94, 96 for receiving data from the respective controller stage in the electrical domain and transmitting that data in the optical domain, and vice versa. Each controller stage has a respective memory 90,92 for storing executable instructions, as well as other data, and a processor facility 102,104 for executing the stored instructions and otherwise processing data in the electrical domain. A respective use interface 106, 108 is provided at the each device, each user interface having user input means 110, 112 to allow a user to input data, and a user display 114,116 to display information for a user.

The first and second devices are configured to initially communicate at a lower bit rate using a protocol that is tolerant to the error rate expected when the connector assembly is partially coupled as indicated in figure 2. That is, in response to a user input indicating that the second device is partially coupled to the first device, controller stage 92 of the second device causes the optoelectrical interface 94 to transmit an ID stored in the local memory. The ID is transmitted at the low bit rate, here at 1 kHz. (Alternatively, the first device may be arranged to transmit signals at intervals in a continuous fashion, the partial coupling at the connector assembly being sufficient to allow the second device to sentence the signals and in responders transmit its ID). In accordance with the executable instructions stored in the local memory, the controller stage of the first device is arranged, in response to receiving the ID, to compare the received ID with a set of stored IDs, and to either authorize or refuse a full connection to the second device in dependence on whether a match is found between an ID in the stored set and the received ID. If a match is found, a response message authorizing the second device is transmitted thereto. Otherwise, the response message is a refusal message refusing a full connection.

The second device is arranged to process the response message from the first device, and, if the response message indicates that the first and second devices are permitted to be coupled, to display an indication on the user display, from which a user can infer that full coupling is appropriate. Otherwise, if a refusal message is received, the controller of the second device causes the display to display an indication of this refusal. Based on the displayed indication, the user can decide whether to pull the abutment member into the open position so as to allow any male and female connectors to be brought into full coupling.

The second device is arranged to sense whether full coupling has been achieved (e.g., by monitoring the input power level) and if so, to transmit data at the normal bit rate, the normal bit rate being higher than the low (initial) bit rate. In this way, a user is given the opportunity to test whether full coupling is appropriate. Furthermore, since without user intervention, full coupling is prevented by the abutment member, the likelihood is reduced that a user will fully couple the first and second devices without previously testing whether such coupling is appropriate.

Alternatively (or in addition), the second device has a code associated therewith, which code is stored in the local memory facility. The first device has a list of one or more allowed codes stored in its local memory facility, the code or codes corresponding to devices for which full coupling is permitted. The second device is arranged to transmit its code at the low bit rate when coupling is only partial. In response to receiving the code from the second device, the first device is arranged to transmit an indication of whether the code matches an allowed coded.

In a further modification to the embodiment of figure 5, the first device has a local optical switch arrangement 117 as shown in figure 6, which switch arrangement is controlled by the controller stage 90, such that if the correct code or ID is received, the switch connects the second device to an operational module 118 of the first device. In this way, the operational module is protected from full coupling with a device that transmits an excessive power level, since one effect of partial coupling is to reduce the through-power coupled by the connector.

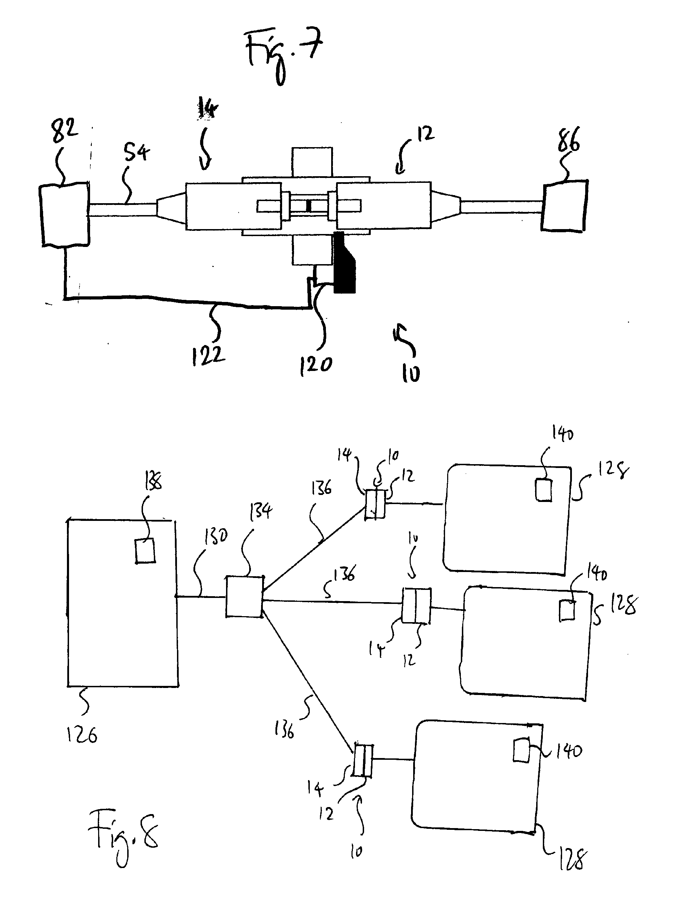

Figure 7 shows a yet a further embodiment in which the connector assembly 10 has an electrical actuator 120 (such as a solenoid actuator) arranged to control the position of the abutment member in response to electrical signals. The actuator in this example is connected to the first device by an electrical link 122, such as a telephony connection, although a radio link or an optical link could be used instead. The electrical actuator may be locally powered. Upon detecting that the second device is suitable for full coupling, as described above for example using code information, the first device is arranged to transmit an electrical signal to the actuator 120 over the electrical link 118, the electrical signal clausing the actuator to move the abutment member 70 into the open position.

In a yet further embodiment, the first device and the second device are each part of an optical network, here a Passive Optical Network or (PON) 124, as shown in figure 8. The optical network has a head end 126, also known as an ONT, corresponding to the first device, and a plurality of network units 128, each also know as an ONU (components in figure 8 having a corresponding function to those in figure 5 have corresponding numerals).

The head end is connected to a trunk fiber 130 of an optical distribution network or ODN 132, the optical distributional network having at least one power splitter 134 which distributes downstream light from the trunk fiber to a plurality of branch fibers 136. The splitter also serves to combine light from different branch fibers travelling in the upstream direction, and to direct of the combined light onto the trunk fiber 130.

Each network unit 128 is connected to a respective branch fiber 136 (at an end thereof that is remote from the splitter) by a respective connector assembly 10, of the type shown in figures 1-3. Typically, the connector assembly is used to releasably connect customer equipment to the network, at an edge or demarcation point of the network; that is, at a far end of one of the branch fibres. In such a situation, the connector assembly is normally located at customer premises, the female connector 14 being wall-mounted and terminating a branch fiber, whilst the male connector 12 terminates a fiber leading to a network unit 128.

When the optical network is in normal operation, the network units will be fully coupled to the optical distribution network (that is, the connector assembly will be in a state shown in figure 3). The head end 126 will broadcast, in the downstream direction, information to the network units 128 over the optical distribution network 132. In the head end will also receive information from the network units in the upstream direction. The light in the upstream and downstream directions will normally be the in infra red region, but at different wavelength to allow duplex traffic over a common fibre path.

In addition to the components of the first device shown in Figure 5, the head end 126 has a scheduler stage 138 for controlling the timing of signals from the respective network units 128, such that there is essentially no risk (or a reduced risk) that upstream signals from one network unit will collide with signals from another network unit where optical paths are combined at a splitter. The network units are configured to transmit short bursts of data in response to scheduling instructions from the head end, the scheduler stage 138 of the head end being arranged to perform a scheduling function such that the transmission of bursts are timed so as not to overlap. Hence, data from the different units is passively interleaved or equivalently multiplexed (in this example temporally, that is, in a time-division manner), in the normal way of a PON. The head end can then access data from each network unit using a TDMA (Time Division Multiplexed Access) protocol. It will be understood that the term "passive" refers to the manner in which data is multiplexed at a splitter, in particular to the way in which the timing function is carried out remotely from the splitter itself, so that the splitter may be passive. However, the splitter may function in the electrical domain, having an upstream interface and a downstream interface to convert data between the optical and electrical domain and vice versa. Furthermore, the optical network may include one or more repeaters or amplifiers.

The scheduling instructions from the head end contain an instruction for a given network unit to transmit data for a predetermined time interval at a predetermined time, with respect to a centralised time (although other in protocols data transmission is timed with respect to the local arrival time of a control signal). Accordingly, each network unit has, in addition to the components of the second device shown in Figure 5, a respective timing unit 140 for measuring the time at which a data burst is to be transmitted in response to a scheduling signal from the head end. Each network unit 128 will normally be connected to customer equipment such as telephony equipment or other communications equipment (not shown), and will be arranged to buffer data from the customer equipment in order to transmit it at the correct time in the upstream direction.

The network units each have an address or identity associated therewith stored in the local memory, and the head end is arranged to transmit broadcast instructions which associate given data with a given address. Each network unit is arranged to monitor the broadcast information from the head end, to capture data addressed to it, and to forward where appropriate the captured data towards the correct customer equipment.

Data in the upstream and downstream directions is transported as a series of cells arranged as a series of frames. A frame includes a plurality of sequentially arranged data cells or time slot, each of which has a data payload for carrying traffic data intended for costumer equipment, and a header, which header includes protocol-specific fields for defined types of information, such as an identifier field for the identity of the network unit for which a given data cell is intended (each network unit is arranged to forward data in the payload to customer equipment, whereas data in the header is not normally so forwarded). Signalling cells are provided between some of the data cells at predetermined positions within a frame (in the present example, two signalling cells and data cells are provided per frame). The signalling cells (also known in some protocols as PLOAM or "Physical Layer Operation, Administration and Maintenance" cells) contain the scheduling instructions (also know as "grants") from the head end which permit one or more specified network units to transmit a specified number of upstream data cells at a respective specified time. The signalling cells also contain dedicated fields for synchronisation information to allow the network units to achieve synchronisation. Additional fields are provided for other control instructions used for ranging, error control, and maintenance. Examples of known protocols for governing signalling, traffic transmission and other aspects of network operation include the ITU standards G983.1 and G983.4.

In the upstream direction, the network units are instructed, by means of the downstream signalling cells, to each transmit upstream data cells at an appropriate time so that the cells from the different network units come together at a junction in an interleaved fashion so as to form a downstream frame structure as described above, guard bands being provided between the cells to allow for timing irregularities. Consecutive cells may or may not originate from the same network unit.

Each network unit has stored, in the local memory thereof (preferably in a read only portion), details of the protocol according to which the optical network is operating. Such details include a set of rules which govern the way in which a network unit responds to the various control instructions from the head end, as well as rules to a now a network unit to correctly interpret the frame structure broadcast by the head end. The tiles of the protocol will normally be entered into memory during manufacture, so that network units which operate according to the protocol are standardized.

Because the terminals communicate with the head end using a time division multiplex protocol, it is particularly important that non-standardized network units or other equipment units are not connected to the optical distribution network. Should non-standardized equipment connected, there is a risk that light from this equipment may superpose with light from another network unit. Thus, the two stage connection described above provides a useful way of reducing the risk of exposing the head end to an excessive power level, since when the connector assembly is in the intermediate position, and coupling is and in the postural, the intensity of light from the Pasha be connected equipment is less than walked the power would be were the equipment fully coupled.

In one embodiment, part of the data broadcast by the head end is recognizable by a standardized terminal even when it is only partially coupled to the optical distribution network; that is, when the connector assembly is in the intermediate position. In response to recognizing the data, a network unit is arranged to display a user message informing a user that the network unit is appropriate for the network. The user can then manually move the abutment member to allow full coupling.

In a yet further embodiment, the network units are arranged to recognize one or more pre-agreed control instructions from the head end (although not necessarily other data such as custom of data in a cell payload), even when the connector assembly is in the intermediate position. Thus in a set-up phase, for example when a network unit is being connected to the optical network, the network unit is only partially coupled at the connector. In the partially coupled state, the network unit is configured to respond to a control instruction inviting the network unit to transmit data at a particular time (albeit at the lower bit rate). Because the network unit being connected to the network can be controlled by the head end to transmit data at the correct time, initial communication can be established with a reduced risk of excessive light levels reaching the head end. Once, on the basis of this initial communication in the partially coupled state, the head end has established that the partially connected network unit is a standardized unit, the connector assembly can be allowed to move into the full coupling state.

## Claims

1. An optical connector assembly having: a first connector; a second connector, the first connector and the second connector being releasably engagable with one another; and, a movable abutment member, the abutment member having a first position which allows the first and second connectors to move sufficiently together such that a first level of optical coupling is possible, and a second position in which the first and second connectors are prevented from moving sufficiently together so as to achieve the first level of optical coupling, wherein the second position allows optical coupling at a second level that is less than the first level.

2. An optical connector assembly as claimed in claim 1, the abutment member having a third position in which optical coupling between the first connector and the second connector is prevented.

3. An optical connector as claimed in claim 2, wherein the first connector has a passage for retaining an optical waveguide, the passage having an opening for allowing light to or from the waveguide to pass therethrough, the abutment member having a shutter portion arranged to cover the opening when the abutment member is in the third position.

4. An optical connector assembly as claimed in any of the preceding claims, wherein the first and second connectors are movable into engagement with one another in a longitudinal direction, and wherein the abutment member is movable between the first and second positions in a direction that is transverse to the longitudinal direction.

5. An optical connector assembly as claimed in any of the preceding claims, wherein the abutment member is mounted on the first connector.

6. In an optical connector assembly as claimed in any of the preceding claims, wherein a resilient member is provided so as to bias the abutment member into the third position.

7. An optical connector assembly as claimed in any of the preceding claim, wherein the abutment member has a shaped portion arranged such that, in use, when the first and second connectors are moved into engagement with one another, the second connector bears against the shaped portion and thereby urges the abutment member into the second position.

8. An optical connector assembly as in claimed in claim 7, wherein the shaped portion has an inclined surface against which the second connector is arranged to bear when the first and second connectors are moved into engagement, the inclined surface having an angle of inclination relative to the movement direction of the first and second connectors, which angle is between 10° and 80°.

9. An optical connector assembly as claimed in claim 8, wherein the angle is substantially 45°.

10. An optical connector assembly as claimed in any of the preceding claims, wherein the first connector is a female connector.

11. An optical connector as claimed in any of the preceding claims, wherein the abutment member has a grip portion for allowing the abutment member to be moved manually from one of the first and second positions to the other of the first and second positions.

12. A method of forming an optical connection between a first connector and a second connector, the first connector having a movable abutment member which, in a blocking position, allows a base level of optical coupling between the first and second connectors but prevents a higher level of optical coupling than the base level, including:
(i) bringing the first and second connectors together such that the base level optical of coupling is achieved;
(ii) moving the abutment member out of the blocking position; and, subsequently,
(iii) bringing the first and second connectors further together so as to achieve a level of coupling that is higher than the base level.

13. A method as claimed in claim 12, wherein in step (i) the first and second connectors are brought together until the second connector abuts the abutment member.

14. A method as claimed in claim 12 or claim 13, wherein in steps (i) and (iii) the first and second connectors are brought together as a result of movement relative to one another that is guided along a common longitudinal axis.

15. A method as claimed in claim 14, wherein a respective optical fiber portion is retained in each of the first and second connectors, and wherein the respective optical fiber portions lie along the common longitudinal axis when the first and second connectors are optically coupled.

16. A method as claimed in any of claims 12 to 15, wherein the optical connection is used to convey infra-red radiation.

17. A method as claimed in any of claims 12 to 16, wherein the connection is a connection to an optical network having a trunk fiber connected by a splitter unit to a plurality of branch fibers such that data transmitted along the trunk fiber is broadcast to the branch fibers.

18. A method as claimed in claim 17, wherein the first connector is connected to a far end of a branch fiber.

19. A method as claimed in claim 17 or 18, wherein the base level of optical coupling is sufficient to convey at least part of the broadcast data, and wherein the broadcast data conveyed when the first and second connectors are coupled at the base level is used to make a decision as to whether to move the abutment member out of the blocking position in order to allow for a greater level of coupling to be achieved.

20. A method as claimed in any of claims 17 to 19, wherein the network is a passive optical network.
